# EUROPEAN PATENT APPLICATION

(11) **EP 4 822 974 A1**
(43) Date of publication of application: **14.10.2026**
(21) Application number: 26164427.2
(22) Date of filing: 12.03.2026
(51) Int. Cl.: H02M 3/156, H02J 7/96, H02M 1/00, H02M 1/32

(54) **SYSTEMS AND METHODS FOR VOLTAGE-BASED CURRENT LIMITING**

(30) Priority: 31.03.2025 US 202519095728
(71) Applicant: Cummins Inc., Columbus, IN 47201 (US)
(72) Inventor: Scheuerell, Michael James, Stillwater, 55082 (US); Loos, Jordan, Columbus, 47201 (US); Woodland, Lane, Cannelton, 47520 (US); Martin, Jeff, Columbus, 47201 (US); Gong, Fei, Redmond, 98053 (US); Sane, Mugdha S., Columbus, 47203 (US)
(74) Representative: Cleveland Scott York

(57) **Abstract**

A system and method of controlling voltage in a power system by automatically manipulating current with a power conversion device (206) in response to a measured voltage value within the power system meeting or exceeding at least one predetermined threshold. The power conversion device (206) may also automatically disconnect from the power system when the measured voltage value meets or exceeds an over-voltage protection threshold. Current manipulation and disconnect from the power system may occur without receiving a command from a supervisory controller.

## Description

### TECHNICAL FIELD OF THE PRESENT DISCLOSURE

The present disclosure relates to systems and methods for limiting voltage in a power system. In particular, the present disclosure relates to power conversion devices configured to limit voltage in a power system.

### BACKGROUND OF THE PRESENT DISCLOSURE

Environmental and efficiency considerations have resulted in the electrification of vehicles across industries and purposes. While electric and hybrid passenger and cargo vehicles are becoming more commonplace, electrification and/or hybridization of large equipment vehicles poses its own set of challenges. For example, large equipment vehicles, such as mining trucks, cranes, bulldozers, etc. may require a workload and/or have a sheer size component that make implementation of alternative powertrains more difficult. Additionally, the power and environmental requirements of such vehicles during operation complicates efficient operative implementation of alternative powertrains.

Battery electric and/or hybrid vehicles typically include direct current (DC) power sources such as one or more batteries to provide power for the respective vehicle. Components and/or systems of the vehicles, such as, for example, traction motors, drive motors, electronic and electrical systems, etc. may use different DC supply voltages. DC-DC converters may be included to buck or boost the battery voltage and to control power flow into and out of the one or more batteries. For example, a DC-DC converter may step up or down energy storage voltage to match with a common DC bus voltage.

### SUMMARY OF THE DISCLOSURE

A system and method of controlling voltage in a power system by automatically manipulating current with a power conversion device in response to a measured voltage value within the power system meeting or exceeding at least one predetermined threshold. The power conversion device may also automatically disconnect from the power system when the measured voltage meets or exceeds an over-voltage protection threshold. Current manipulation and disconnect from the power system may occur without receiving a command from a supervisory controller.

In a first aspect of the disclosure, a system for limiting voltage is disclosed. The system includes a power source configured to provide power to a power network of the system; a power conversion device connecting the power source to the power network; and a controller connected to the power conversion device. The controller is configured to transmit a current command to the power conversion device to maintain a steady current within the power conversion device. The power conversion device is configured to override the current command received by the controller and automatically alter current within the power conversion device in response to a measured voltage of the power system meeting or exceeding a predetermined voltage threshold.

In a second aspect of the disclosure, a power system is disclosed. The power system includes a power source; a power network; and a power conversion device configured to connect the power source and the power network. The power conversion device includes a first state in which the power conversion device maintains a steady current; a second state in which a measured voltage meets or exceeds a first voltage threshold and the power conversion device increases current in response; and a third state in which the measured voltage meets or exceeds a second voltage threshold and the power conversion device decreases current in response.

In a third aspect of the disclosure, a method for limiting voltage is disclosed. The method includes measuring a change in voltage within a power system, the power system including a power conversion device; automatically increasing current using the power conversion device in response to a measured voltage meeting or exceeding a first threshold; automatically decreasing current using the power conversion device in response to the measured voltage meeting or exceeding a second threshold; and automatically disconnecting the power conversion device in response to the measured voltage meeting or exceeding a third threshold.

In various aspects of the disclosure, the power source may include a battery system.

In various aspects of the disclosure, the power conversion device may be configured to revert to the transmitted current command of the controller when the measured voltage of the power system is within a normal operation zone which does not meet or exceed the predetermined voltage threshold.

In various aspects of the disclosure, the predetermined voltage threshold includes a first predetermined voltage threshold defined in part by a preselected maximum voltage value and a second predetermined voltage threshold defined in part by a preselected minimum voltage value. The power conversion device may be configured to automatically decrease current in response to the measured voltage meeting or exceeding the first predetermined voltage threshold. The power conversion device may be configured to automatically increase current in response to the measured voltage meeting or exceeding the second predetermined voltage threshold.

In various aspects of the disclosure, the power conversion device may be configured to automatically disconnect from the power system in response to the measured voltage of the power system meeting or exceeding an over-voltage protection threshold greater than the predetermined voltage threshold.

In various aspects of the disclosure, the power conversion device may be configured to automatically change from any of the first state, the second state, and the third state to any other of the first state, the second state, and the third state in response to a change in the measured voltage.

In various aspects of the disclosure, the power conversion device may further include a fourth state in which the measured voltage meets or exceeds a third voltage threshold and the power conversion device disconnects from the power system.

In various aspects of the disclosure, the first voltage threshold may be determined by a preselected minimum voltage value and a preselected low voltage value.

In various aspects of the disclosure, the first voltage threshold and the second voltage threshold may be separated by a zone of normal operation in which the power conversion device is in the first state.

In various aspects of the disclosure, the method may further include returning to a steady state in which the power conversion device maintains a steady current in response to the measured voltage no longer meeting or exceeding the first threshold.

In various aspects of the disclosure, the method may further include returning to a steady state in which the power conversion device maintains a steady current in response to the measured voltage no longer meeting or exceeding the second threshold.

In various aspects of the disclosure, measuring a change in voltage within a power system may occur in response to a sudden change in current downstream of the power system from the power conversion device.

In various aspects of the disclosure, the method may further include maintaining a steady current with the power conversion device in response to a command received by a controller in response to the measure voltage meeting or exceeding none of the first threshold, the second threshold, and the third threshold. The first threshold and the second threshold may be separated by a zone of normal operation in which the power conversion device maintains a steady current.

In various aspects of the disclosure, the first threshold may be defined by a line of interpolation between a preselected minimum voltage value at a 0% charge current and a preselected low voltage value at a 100% charge current when the power system is in a charging state.

In various aspects of the disclosure, the second threshold may be defined by a line of interpolation between a preselected maximum voltage at a 0% discharge current and a preselected high voltage value at a 100% discharge current when the power system is in a discharging state.

Additional features and advantages of the present disclosure will become apparent to those skilled in the art upon consideration of the following detailed description of the illustrative embodiments exemplifying the disclosure as presently perceived.

### BRIEF DESCRIPTION OF THE DRAWINGS

The detailed description of the drawings particularly refers to the accompanying figures in which:
FIG. 1 is a schematic illustration of a hybrid electric or electric vehicle;
FIG. 2 is a schematic illustration of a power system of a vehicle;
FIG. 3 is an illustration of an exemplary voltage map; and
FIG. 4 is an flow chart illustrating a method of limiting current within a power system.

Although the drawings represent embodiments of various features and components according to the present disclosure, the exemplification set out herein illustrates an embodiment, and such an exemplification is not to be construed as limiting the scope of the disclosure in any manner.

### DETAILED DESCRIPTION OF THE DRAWINGS

For the purposes of promoting an understanding of the principles of the present disclosure, reference will now be made to the embodiments illustrated in the drawings, which are described herein. The embodiments disclosed herein are not intended to be exhaustive or to limit the invention to the precise form disclosed. Rather, the embodiments are chosen and described so that others skilled in the art may utilize their teachings. Therefore, no limitation of the scope of the claimed invention is thereby intended. The present invention includes any alterations and further modifications of the illustrated devices and described methods and further applications of principles in the invention which would normally occur to one skilled in the art to which the invention relates.

The terms "couples", "coupled", "coupler" and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

In some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

As used herein "battery system" refers to any collection of batteries, including battery packs, battery modules, battery cells, etc., for operation of a battery or hybrid powertrain.

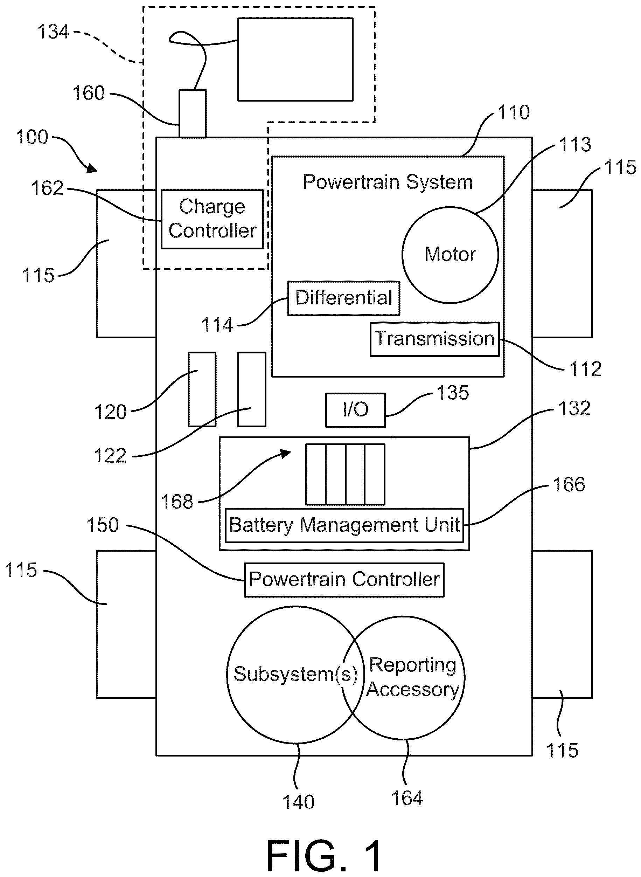

FIG. **1** illustrates a schematic diagram of a vehicle **100** which may use one or more power converters as discussed further herein. Although the exact embodiment shown and described herein relative to FIG. **1** is most similar to that of a battery electric vehicle, vehicle **100** and the embodiments discussed in accordance with this disclosure may be used in any other appropriate application, such as, for example, vehicles with alternative hybrid powertrains and/or vehicles such as locomotives and large equipment vehicles including mining trucks and/or construction equipment.

In other words, while the vehicle illustrated in FIG. **1** is most similar to a battery electric vehicle, it is understood that vehicle **100** may be generally interchanged with a hybrid vehicle, such as a plug-in hybrid vehicle or another hybrid vehicle, which is powered or otherwise operable via a battery system and, optionally, one or more of a generator (e.g., a power generator, generator plant, electric power strip, on-board rechargeable electricity storage system, etc.) and a motor (e.g., an electric motor, traction motor, etc.) For example, a hybrid DC power supply may be used to provide multiple supply voltages from a single alternator and converter, for example, in vehicles requiring both 12V and 48V power supplies.

Vehicle **100** may be operable in at least one of a reverse direction (e.g., a backward direction relative to a front end of vehicle **100)** and a non-reverse direction (e.g., a forward direction, angular direction, etc., relative to the front end of vehicle **100).** Vehicle **100** may be an on-road or off-road vehicle including, but not limited to, cars, trucks, ships, boats, vans, airplanes, spacecraft, or any other type of vehicle.

Vehicle **100** may include a powertrain controller **150** communicably and operatively coupled to a powertrain system **110,** a brake mechanism **120,** an accelerator pedal **122,** one or more sensors, an operator input/output (I/O) device **135,** and one or more additional vehicle subsystems **140.** Vehicle **100** may include additional, fewer, and/or different components systems than depicted in FIG. **1****,** such that the principles, methods, systems, apparatuses, processes, and the like of the present disclosure are intended to be applicable with any suitable vehicle configuration. It should also be understood that the principles of the present disclosure should not be interpreted to be limited to on-highway vehicles; rather, the present disclosure contemplates that the principles may also be applied to a variety of other applications including, but not limited to, off-highway construction equipment, mining equipment, marine equipment, locomotive equipment, etc.

Powertrain system **110** may facilitate power transfer from a battery **132** or battery system and/or a motor **113** to power vehicle **100.** In some embodiments, powertrain **110** may include motor **113** operably coupled to battery **132** and charge system **134,** where motor **113** transfers power to a final drive (e.g., wheels **115)** to propel vehicle **100.** As depicted, powertrain system **110** may include other various components, such as a transmission **112** and/or differential **114,** where differential **114** transfers power output from transmission **112** to final drive **115** to propel vehicle **100.**

Powertrain controller **150** of vehicle **100** provides electricity to motor **113** (e.g., an electric motor) in response to various inputs received by powertrain controller **150,** for example, from accelerator pedal **122,** sensors, vehicle subsystems **140,** charge system **134** (e.g., a battery charging system rechargeable battery, etc.). In some embodiments, electricity provided to power motor **113** and/or electrical components of subsystems **140** may be provided by an onboard gasoline-engine generator, a hydrogen fuel cell, a hybrid DC power source, etc.

In some embodiments, vehicle **100** may include a transmission **112.** Transmission **112** may be structured as any type of transmission compatible with vehicle **100,** including a continuous variable transmission, a manual transmission, an automatic transmission, an automatic-manual transmission, or a dual clutch transmission, for example. As transmissions vary from geared to continuous configurations, transmission **112** may include a variety of settings (e.g., gears, for a geared transmission) that affect different output speeds based on an engine speed or motor speed.

Like transmission **112,** motor **113,** differential **114,** and final drive **115** may be structured in any configuration compatible with vehicle **100.** In some embodiments, transmission **112** is omitted and motor **113** is directly coupled to differential **114.** In other embodiments, motor **113** may be directly coupled to final drive **115** as a direct drive application. In some examples, vehicle **100** may include multiple instances of motor **113,** for example, one instance for each driven wheel, one instance per driven axle, or other compatible arrangements.

Brake mechanism **120** may be implemented as a brake (e.g., hydraulic disc brake, drum brake, air brake, etc.), braking system, or any other device configured to prevent or reduce motion by slowing or stopping components (e.g., a wheel, axle, pedal, crankshaft, driveshaft, etc. of vehicle **100).** Generally, brake mechanism **120** is configured to receive an indication of a desired change in the vehicle speed.

In some embodiments, brake mechanism **120** includes a brake pedal operable between a released state and an applied state by an operator of vehicle **100.** The brake pedal may be configured as a pressure-based system responsive to applied pressure or a travel-based system responsive to a travel distance of the pedal, where a force applied to brake mechanism **120** is proportional to the pressure and/or travel distance. In some embodiments, all or a portion of brake mechanism **120** is incorporated into motor **113,** for example, as a regenerative brake mechanism.

Generally, the released state of brake mechanism **120** corresponds to a brake pedal in a default location where the brake mechanism is not applied, for example, when the operator's foot is not placed on the brake pedal at all or merely resting on the brake pedal such that a minimum actuation force is not exceeded (e.g., a spring-assisted, hydraulic-assisted, or servo-assisted force that pushes the brake pedal to the default location).

In some embodiments, the brake pedal is combined with accelerator pedal **122** in a one-pedal driving configuration. In some examples, the applied state of brake mechanism **120** may correspond to the brake pedal being pressed with a force that meets or exceeds the minimum actuation force. In other examples, the applied state of brake mechanism **120** corresponds to the brake pedal being pressed so that the travel distance of the brake pedal meets or exceeds a minimum travel distance.

Generally, the minimum actuation force and/or minimum travel distance help to prevent accidental actuation of brake mechanism **120.** Different levels of the minimum actuation force and/or minimum travel distance may be used for different implementations of brake mechanism **120,** for example, relatively higher forces or travel distance for a foot-actuated brake pedal and/or relatively lower forces or travel distance for a hand-actuated brake lever. Although the brake pedal may have a range of pressures and/or travel distances that provide at least some braking effect on vehicle **100** (e.g., high pressures for hard or emergency braking, lower pressures for gradual braking or "feathering" the brakes), this range of pressures and/or travel distances are within the applied state.

The released state may correspond to an indication of a desired increase in vehicle speed, while the applied state may correspond to an indication of a desired reduction in vehicle speed. In some embodiments, a reduction in actuation force and/or travel distance corresponds to a desired increase in vehicle speed, while an increase in actuation force and/or travel distance corresponds to a desired reduction in vehicle speed.

Accelerator pedal **122** may be structured as any type of torque and/or speed request device included with a system (e.g., a floor-based pedal, an acceleration lever, paddle or joystick, etc.). Sensors associated with accelerator pedal **122** and/or brake mechanism **120** may include a vehicle speed sensor that provides a vehicle speed signal corresponding to a vehicle speed of vehicle **100,** an accelerator pedal position sensor that acquires data indicative of a depression amount of the pedal (e.g., a potentiometer), a brake mechanism sensor that acquires data indicative of a depression amount (pressure or travel) of brake mechanism **120,** a coolant temperature sensor, a pressure sensor, an ambient air temperature, or other suitable sensors.

Vehicle **100** may include operator I/O device **135.** Operator I/O device **135** may enable an operator of the vehicle to communicate with vehicle **100** and/or powertrain controller **150.** Analogously, operator I/O device **135** enables vehicle **100** and/or powertrain controller **150** to communicate with the operator. For example, operator I/O device **135** may include, but is not limited to, an interactive display (e.g., a touchscreen) having one or more buttons, input devices, haptic feedback devices, an accelerator pedal, a brake pedal, a shifter, or other interface for transmission **112,** a cruise control input setting, a navigation input setting, or other settings or adjustments available to the operator. Via operator I/O device **135,** powertrain controller **150** may also provide commands, instructions, and/or information to the operator or a passenger.

Vehicle **100** includes one or more vehicle subsystems **140,** which may generally include one or more sensors (e.g., a speed sensor, ambient pressure sensor, temperature sensor, etc.), as well as any other subsystem that may be included with a vehicle. Vehicle subsystems **140** may also include torque sensors for one or more of motor **113,** transmission **112,** differential **114,** and/or final drive **115.**

Other vehicle subsystems **140** may include a steering subsystem for managing steering functions, such as electrical power steering, and output information such as wheel position and fault codes corresponding to steering battery electric vehicle **100;** an electrical subsystem which may include audio and visual indicators, such as hazard lights and speakers configured to emit audible warnings, as well as other functions; and a thermal management system, which may include components such as a radiator, coolant, pumps, fans, heat exchangers, computing devices, and associated software applications. Vehicle **100** may include further sensors other than those otherwise discussed herein, such as cameras, LIDAR, and/or RADAR, temperature sensors, smoke detectors, virtual sensors, among other potential sensors.

Powertrain controller **150** may be communicably and operatively coupled to powertrain system **110,** brake mechanism **120,** accelerator pedal **122,** operator I/O device **135,** and one or more vehicle subsystems **140.** Communication between and among the components may be via any number of wired or wireless connections. For example, a wired connection may include a serial cable, a fiber optic cable, an SAE J1939 bus, a CAT5 cable, or any other form of wired connection.

In comparison, a wireless connection may include the Internet, Wi-Fi, Bluetooth, Zigbee, cellular, radio, etc. In one embodiment, a controller area network (CAN) bus including any number of wired and wireless connections provides the exchange of signals, information, and/or data.

Powertrain controller **150** is structured to receive data (e.g., instructions, commands, signals, values, etc.) from one or more of the components of vehicle **100** as described herein via the communicable coupling of powertrain controller **150** to the systems and components of vehicle **100.** In some embodiments, an additional or alternative controller may be used for receiving data from certain systems or components.

In vehicles including charge system **134,** such as a plug-in charging system, powertrain controller **150** may control charging of battery **132** when a charger of charge system **134** is connected to vehicle **100** A charge controller **162** may establish communication between powertrain controller **150** and charger **160.** Charge controller **162** may monitor sensor signals and perform safety and performance checks and determine faults based thereon. For example, charge controller **162** may determine a fault if charging has started but a physical connection between charger **160** and vehicle **100** fails to be detected or is detected to be outside safe boundaries. In other words, charge controller **162** may function as a communication interface between charger **160** and powertrain controller **150.**

Powertrain controller **150** may be communicably coupled with charger **160,** battery **132,** and a reporting accessory **164** so that digital data may be transferred between components. Reporting accessory **164** may be included with a vehicle subsystem **140** or another vehicle component. A CAN bus may be implemented to provide communication capabilities. In some embodiments, a first CAN bus may be implemented to provide communications between a first plurality of components while a second CAN bus may be implemented to provide communications between a second plurality of components. Any series or parallel communication scheme and protocol known in the art may be implemented to provide communication.

Reporting accessory **164** may be operable to communicate information to powertrain controller **150.** Such information may include identification, current demand, high or low voltage power draw, and other information required for operation of vehicle **100.** Identification information may include a maximum current capacity of reporting accessory **164,** for example. The current demand may be dynamic, such that the current demanded by reporting accessory **164** varies.

Reporting accessory **164** may include an air-conditioning system, for example, and the current demand may vary based on a measured actual temperature of an interior of vehicle **100** compared to a target temperature. By reporting current demand to powertrain controller **150,** reporting accessory **164** enables powertrain controller **150** to more accurately determine the target current to generate the charge command to charger **162.**

Comparatively, when the load of a non-reporting accessor is dynamic and unknown, charger **162** may underdeliver current to battery **132,** extending charging time. The charge command may also take into account the charger's capability to deliver current and indicates to charger **162** the level of current to output to vehicle **100,** which is ideally sufficient to optimally charge battery **132** and also power the accessories.

Battery **132** may include one or more battery packs including a battery management unit **166** and battery modules **168.** FIG. **1** is not determinative of the number of battery modules within a battery pack or the number of battery packs within battery **132.** Battery **132** may include a greater number of battery packs and/or a grater or lesser number of battery modules. Temperature, voltage, and other sensors may be provided to enable battery management unit **166** to manage the charging and discharging of battery modules **168** without exceeding their limits, to detect and manage faults, and to perform other known functions.

Battery management unit **166** may transmit data to powertrain controller **150** related to information about battery **132,** including the battery charge power limit, temperature, faults, etc. Battery **132** may include a current sensor to provide a measured current value to battery management unit **166,** which may be used to affect the charge command provided to charger **162.** The current sensor may be located elsewhere. Multiple current sensors may be used, each current sensor associated with a battery module of battery **132,** with the sum of the measured currents being the measured current of battery **132.**

Powertrain controller **150** may include a charge logic operable to determine a command for charger **162** to supply a target current to battery **132.** The charge logic may also be integrated with a controller of battery management unit **166** or provided in a standalone controller communicatively coupled to powertrain controller **150.** In other words, powertrain controller **150** may also transmit data to battery management unit **166.** The term "logic" as used herein includes software and/or firmware comprising processing instructions executing on one or more programmable processors, application-specific integrated circuits, field-programmable gate arrays, digital signal processors, hardwired logic, or combinations thereof, which may be referred to as "controllers". As such, various logic may be implemented in any appropriate fashion.

A non-transitory machine-readable medium comprising logic may be included within any tangible form of a computer-readable carrier, such as a solid-state memory, containing an appropriate set of computer instructions and data structures that would cause a processor to carry out the techniques described herein. A non-transitory computer-readable medium, or memory, may include random access memory (RAM), read-only memory (ROM), erasable programmable read-only memory (e.g., EPROM, EEPROM, or Flash), or any tangible medium capable of storing information.

A transport control system and charging system may communicatively connect multiple charger and control charging processes in a depot, linking charging points, power supplies, and operational information systems, such as planning and scheduling systems. The transport control system may provide the charging management system information, such as estimated arrival time of vehicles, time available for charging, and scheduled pull-out time. The charging management system may then calculate the charging requirements for each vehicle and optimize charging processes for the fleet of vehicles to, for example, avoid expensive grid peak load periods where possible.

The charging management system may also assign time slots for charging to each vehicle and monitor progress of charging of each vehicle. The charging management system may receive, from each vehicle, an estimated time to full charge. In other embodiments, the vehicle may provide the relevant data to the charging management system, which may then estimate the time to full charge within its control logic.

As described above, although FIG. **1** most closely resembles a battery electric vehicle, the disclosure provided herein may also apply to vehicles having other powertrains, such as, for example, a plug-in hybrid vehicle or another hybrid vehicle or vehicle with alternative powertrain. In such embodiments, the vehicle may optionally include an engine, which may be structured as an internal combustion engine that receives a chemical energy input (e.g., a fuel such as natural gas, gasoline, ethanol, or diesel) from a fuel delivery system and combusts the fuel to generate mechanical energy in the form of a rotating crankshaft. In such an embodiment, the transmission receives the rotating crankshaft and manipulates the speed of the crankshaft (e.g., the engine speed, which is usually expressed in revolutions-per-minute (RPM)) to affect a desired draft shaft speed. A rotating drive shaft may be received by the differential, which provides the rotation energy from the drive shaft to the final drive, which then propels or moves the vehicle.

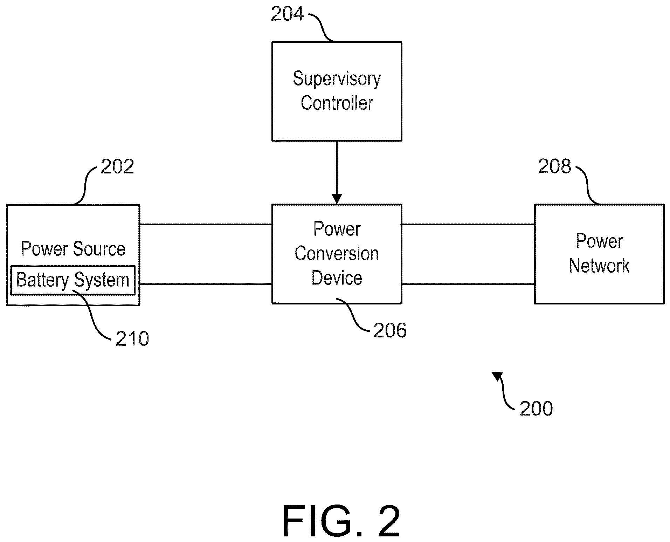

Referring to FIG. **2****,** power systems including batteries, such as power system **200,** may provide power to a variety of systems and subsystems and/or store power for later use. For example, hybrid electric vehicles, electric vehicles, generators, storage of renewable energy for later use, and energy storage on a grid for various purposes (e.g., grid stability, peak shaving, renewable energy time shifting, etc.) may use and/or involve battery systems (e.g., power source **202).** Often, the state of charge (SOC) and state of health (SOH) is estimated and monitored to track the available capacity and overall health of the battery system. For example, SOC may be defined as the available capacity of an individual battery and/or battery system, expressed as a percentage of the rated capacity. SOH may represent a measure of the battery's ability to store and deliver electrical energy, compared with a new battery.

SOC and SOH may facilitate description of performance of the respective battery and/or battery system and help predict its future behavior. Estimation of SOC and SOH may include consideration of numerous factors and parameters. For example, age, cycle life (number of charge/discharge cycles), capacity, internal resistance, energy throughput, temperature, self-discharge rate, and/or voltage may be considered when evaluating the SOH of a battery and/or battery system.

With passage of time, batteries and/or battery systems may generally age and degrade, resulting in the respective SOH dropping below its initial level. Batteries and/or battery systems with a lower SOH may discharge much faster than batteries and/or battery systems with a comparatively greater SOH due to a predictable decline in the rated capacity occurring over time.

Battery chemistry, voltage, current, capacity, impedance, charging/discharging rate, and temperature of a battery and/or battery system may be considered when evaluating the SOC of the respective battery and/or battery system. The SOC illustrates the amount of electric charge left in the battery, usually expressed as a percentage that ranges from 0% to 100% depending on the charge level. Charging/discharging requirements include voltage, current, and temperature limits, and going beyond these limits may lead to battery damage.

A battery management system, or controller **204,** may be used to ensure safe, effective, and ideal operation of batteries by monitoring and/or controlling SOC and SOH by monitoring and controlling their usage. For example, as discussed above, monitoring SOC and SOH may involve measuring the battery and/or battery system's voltage, current, and temperature. The controller **204** may use these results to determine the SOC and/or SOH and use the information to mitigate the chances of overcharge and/or overdischarge of the battery and/or battery system, which may result in permanent damage to the battery and/or battery system.

Such battery systems may use voltage-balancing devices, systems, and methods which may include the use of one or more DC-DC converters (e.g., power conversion device **206)** connected to one or more batteries. In some embodiments, a DC-DC converter may be connected to one battery or multiple batteries to form a battery circuit. In other embodiments, multiple battery circuits may be connected in parallel to a common DC bus. Some DC-DC converters may facilitate isolation of each battery in the battery circuit from other batteries or battery circuits by controlling current flows. In larger systems, multiple DC-DC converters may work in concert.

For example, still referring to FIG. **2****,** a schematic of power system **200** is illustrated. Power system **200** may include power source **202,** including at least a battery system **210** and/or an internal combustion engine in hybrid vehicle embodiments. Power conversion device **206** is connects power source **202** to a power network **208,** which may include a number of vehicle systems or subsystems which requires conversion of power from power source **202** for proper and safe operation of the connected systems or subsystems within power network **208.** Power conversion device **206** may be a DC-DC converter as described above, an AC-DC converter, or an AC-AC converter. A controller **204** transmits instructions to power conversion device **206** to facilitate operation of power conversion device **206.**

As discussed above, controller **204** may command a current to power conversion device **206** so that power conversion device **206** maintains the commanded current on its output terminals, i.e., a fixed current arrangement. Under a fixed current arrangement, if the current downstream of power conversion device **206** suddenly changes, the voltage within power network **208,** including within power conversion device **206** and power source **202,** may rapidly changes in response.

Events which may cause a sudden current change may include, for example, a sudden change in load on a circuit within power network **208** downstream of power conversion device **206,** a fault in circuitry within power network **208** downstream of power conversion device **206,** a malfunction of power conversion device **206,** a fluctuation in power input from power source **202,** or environmental factors which may affect the performance of power system **200** and/or its components. Other factors may cause a sudden current change downstream of power conversion device **206** in some embodiments.

A rapid change in voltage as described above may lead to damage of power system **200** and/or its components and/or reduced performance of power system **200.** To mitigate undesirable results of a rapid change in voltage, power conversion device **206** may override the current control function of controller **204** in response to the change in voltage to maintain the voltage level of power system **200** within an acceptable range, as described further herein.

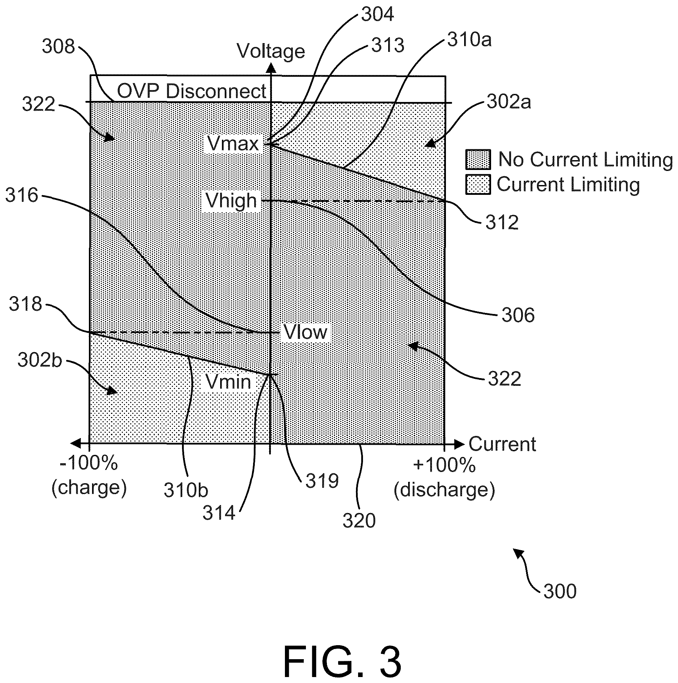

For example, referring additionally to FIG. **3****,** power conversion device **206** may be configured to override the current command received from controller **204** when a measured voltage of power conversion device **206** is within a current limiting zone **302a, 302b** of voltage map **300.** Voltage map **300** generally maps voltage of power system **200** and/or power conversion device **206** where voltage is mapped along the y-axis and current is mapped along the x-axis.

Upper current limiting zone **302a** is defined by a predetermined maximum voltage threshold (Vₘₐₓ **304),** a predetermined high voltage threshold (V_{high} **306),** and an over-voltage protection threshold (OVP **308)** when battery system **210** is being discharged at a rate above 0%. As used herein, "predetermined" includes any parameter provided by an input, including parameters which are set prior to operation or parameters which are adjusted dynamically during operation by an operator or controller, such as controller **204.**

For example, Vₘₐₓ **304** is a preselected threshold selected and/or adjusted by an operator or controller, such as controller **204,** in view of suitable operation levels of the relevant system. For example, in some applications, a Vₘₐₓ threshold level may be suitably selected at a higher value than in other applications. Factors in selecting Vₘₐₓ **304** may include the type of power source **202,** SOC and/or SOH of battery system **210,** voltage ratings of affected systems, operating mode of the vehicle, and other factors. Vₘₐₓ **304** may be selected at a level at which alteration of current and/or voltage level may mitigate the chance of damage to power system **200,** but at which damage to power system **200** is threatened and/or operation of power system **200** may be compromised.

In some embodiments, Vₘₐₓ **304** may be selected at a particular voltage value. In other embodiments, Vₘₐₓ **304** may be selected as a function of a maximum voltage of battery system **210** or a component thereof. For example, in some embodiments, Vₘₐₓ **304** may substantially equal the maximum voltage of battery system **210** or a component thereof; in other embodiments, Vₘₐₓ **304** may include the maximum voltage of battery system **210** or a component thereof plus a margin voltage amount.

In some embodiments, Vₘₐₓ **304** may be selected according to the direction in which current flows through power conversion device **306.** In other words, within single power system **200,** Vₘₐₓ **304** may be a first preselected threshold when current flows in a first direction and a second preselected threshold when current flows in a second direction. In other embodiments, Vₘₐₓ **304** may not substantially vary regardless of direction of current flow.

V_{high} **306** is a preselected threshold selected by an operator or controller, such as controller **204,** in view of suitable operation levels of the relevant system. For example, in some applications, a V_{high} threshold level may be suitable selected at a higher value than in other applications. Factors in selecting V_{high} **306** may include the type of power source **202,** SOC and/or SOH of battery system **210,** capacity of battery system **210,** and other factors. V_{high} **306** may be selected at a value at which, at some discharge levels, there is no or little threat of damage to power system **200** and, at other discharge levels, damage to power system **200** is threatened and/or operation of power system **200** may be compromised but may be mitigated with alteration to the current and/or voltage level.

In some embodiments, V_{high} **306** may be selected at a particular voltage value. In other embodiments, V_{high} **304** may be selected as a function of a maximum voltage of battery system **210** or a component thereof. For example, in some embodiments, V_{high} **306** may substantially equal the maximum voltage of battery system **210** or a component thereof; in other embodiments, V_{high} **306** may include the maximum voltage of battery system **210** or a component thereof plus a margin voltage amount. Generally, V_{high} **306** has a value that is less than the value of Vₘₐₓ **304.**

In some embodiments, V_{high} **306** may be selected according to the direction in which current flows through power conversion device **206.** In other words, within single system **200,** V_{high} **306** may be a first preselected threshold when current flows in a first direction and a second preselected threshold when current flows in a second direction. In other embodiments, V_{high} **306** may not substantially vary regardless of direction of current flow.

OVP **308** may be selected at a level beyond which damage to power system **200** is inevitable and/or operation of power system **200** is compromised. When a voltage level of power system **200** reaches OVP **308,** power conversion device **206** disconnects from power system **200** to stop power flow.

A line of interpolation **310a** extends from the intersection **312** of V_{high} **306** and 100% discharge current to the intersection **313** of Vₘₐₓ **306** and 0% discharge current so that upper current limiting zone **302a** is defined between line of interpolation **310a** and OVP **308** on the y-axis and between 0% discharge current, 100% discharge current, and line of interpolation **310a** on the x-axis.

Lower current limiting zone **302b** is defined by a predetermined minimum voltage threshold (Vₘᵢₙ **314)** and a predetermined low voltage threshold (V_{low} **316)** when battery system **210** is being charged at a rate above 0%.

For example, Vₘᵢₙ **314** is a preselected threshold selected by an operator or controller, such as controller **204,** in view of suitable operation levels of the relevant system. For example, in some applications, a Vₘᵢₙ threshold level may be suitably selected at a lower value than in other applications. Factors in selecting Vₘᵢₙ **314** may include the type of power source **202,** SOC and/or SOH of battery system **210,** capacity of battery system **210,** and other factors. Vₘᵢₙ **314** may be selected at a level at which alteration of current and/or voltage level may mitigate the chance of damage to power system **200,** but at which damage to power system **200** is threatened and/or operation of power system **200** may be compromised.

In some embodiments, Vₘᵢₙ **314** may be selected at a particular voltage value. In other embodiments, Vₘᵢₙ **314** may be selected as a function of a maximum voltage of battery system **210** or a component thereof. For example, in some embodiments, Vₘᵢₙ **314** may substantially equal the minimum voltage of battery system **210** or a component thereof; in other embodiments, Vₘᵢₙ **314** may include the minimum voltage of battery system **210** or a component thereof plus a margin voltage amount.

In some embodiments, Vₘᵢₙ **314** may be selected according to the direction in which current flows through power conversion device **306.** In other words, within single power system **200,** Vₘᵢₙ **314** may be a first preselected threshold when current flows in a first direction and a second preselected threshold when current flows in a second direction. In other embodiments, Vₘᵢₙ **314** may not substantially vary regardless of direction of current flow.

V_{low} **316** is a preselected threshold selected by an operator or controller, such as controller **204,** in view of suitable operation levels of the relevant system. For example, in some applications, a V_{low} threshold level may be suitable selected at a lower value than in other applications. Factors in selecting V_{low} **316** may include the type of power source **202,** SOC and/or SOH of battery system **210,** capacity of battery system **210,** and other factors. V_{low} **316** may be selected at a value at which, at some discharge levels, there is no or little threat of damage to power system **200** and, at other discharge levels, damage to power system **200** is threatened and/or operation of power system **200** may be compromised but may be mitigated with alteration to the current and/or voltage level.

In some embodiments, V_{low} **316** may be selected at a particular voltage value. In other embodiments, V_{low} **316** may be selected as a function of a minimum voltage of battery system **210** or a component thereof. For example, in some embodiments, V_{low} **316** may substantially equal the minimum voltage of battery system **210** or a component thereof; in other embodiments, V_{low} **316** may include the minimum voltage of battery system **210** or a component thereof plus a margin voltage amount. Generally, V_{low} **316** has a value that is greater than the value of Vₘᵢₙ **314.**

In some embodiments, V_{low} **316** may be selected according to the direction in which current flows through power conversion device **206.** In other words, within single system **200,** V_{low} **316** may be a first preselected threshold when current flows in a first direction and a second preselected threshold when current flows in a second direction. In other embodiments, V_{low} **316** may not substantially vary regardless of direction of current flow.

A line of interpolation **310b** extends from the intersection **318** of V_{low} **316** and 100% charge current to the intersection **319** of Vₘᵢₙ **314** and 0% charge current so that lowercurrent limiting zone **302b** is defined between line of interpolation **310b** and 0V **320** on the y-axis and between 0% charge current, 100% charge current, and line of interpolation **310b** on the x-axis.

As discussed further herein, when the measured voltage of power system **200,** e.g., the measured voltage within power conversion device **206,** is within current limiting zones **302a, 302b,** power conversion device **206** automatically reacts by overriding the instructions received from controller **204** to either rise or lower the current within power conversion device **206,** thereby lowering the voltage within power conversion device **206** and power system **200.**

The area of voltage map **300** outside of OVP **308** and current limiting zones **302a, 302b** is a normal operation zone **322,** in which power system **200** operates as normal, e.g., power conversion device **206** operates according to the command(s) received from controller **204.**

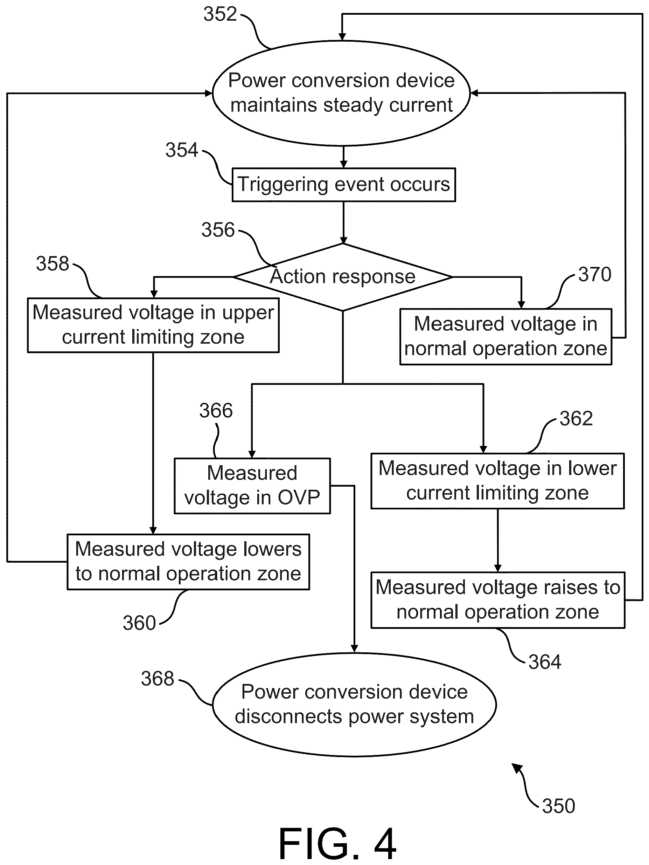

Now referring to FIG. **4** in view of FIGS. **2-3****,** a method **350** of limiting current within power system **200** is provided. At the beginning of method **350** (e.g., box **352),** power conversion device **206** maintains a steady current on its terminals during operation. This continues until power conversion device **206** shuts down or power system **200** experiences a triggering event as described further herein.

At box **354,** a triggering event occurs causing the voltage of power system **200** to rapidly change in response. The triggering event may be a sudden current change within power system **200,** for example, downstream of power conversion device **206,** which may result from a sudden change in load on a circuit within power network **208** downstream of power conversion device **206,** a fault in circuitry within power network **208** downstream of power conversion device **206,** a malfunction of power conversion device **206,** a fluctuation in power input from power source **202,** or environmental factors which may affect the performance of power system **200** and/or its components. Other factors may cause a sudden current change in some embodiments.

At box **356,** power conversion device **206** automatically takes one of four action depending on a measured voltage of power system **200.** The measured voltage of power system **200** may be measured, for example, at power conversion device **206.** In other words, power conversion device **206** measures the voltage of power system **200** or otherwise receives the measured voltage of power system **200.**

For example, if the measured voltage of power system **200** is within upper current limiting zone **302a,** that is, referring to FIG. **3****,** if the measured voltage of power system **200** is between line of interpolation **310a** and OVP **308** on the y-axis and between 0% discharge current, 100% discharge current, and line of interpolation **310a** on the x-axis at box **358,** power conversion device **206** overrides the current command received from controller **204** and automatically lowers the current within power conversion device **206.** Because current and voltage are directly related, lowering the current within power conversion device **206** also lowers the voltage within power conversion device **206.** At box **360,** the measured voltage passes out of upper current limiting zone **302a** into normal operation zone **322,** and power conversion device **206** reverts to normal operation - i.e., according to command(s) received from controller **204.**

If the measured voltage of power system **200** is within lower current limiting zone **302b,** that is, referring to FIG. **3****,** if the measured voltage of power system **200** between line of interpolation **310b** and 0V **320** on the y-axis and between 0% charge current, 100% charge current, and line of interpolation **310b** on the x-axis at box **362,** power conversion device **206** overrides the current command received from controller **204** and automatically raises the current within power conversion device **206.** Because current and voltage are directly related, raising the current within power conversion device **206** also raises the voltage within power conversion device **206.** At box **364,** the measured voltage passes out of lower current limiting zone **302b** into normal operation zone **322,** and power conversion device **206** reverts to normal operation - i.e., according to command(s) received from controller **204.**

If the measured voltage of power system **200** meets or exceeds OVP **308** at box **366,** power conversion device **206** overrides the current command received from controller **204** and automatically disconnects to stop the flow of current through power system **200** at box **368.**

If the measured voltage of power system **200** remains within normal operation zone **322** at box **370,** power conversion device **206** maintains normal operation - i.e., according to command(s) received from controller **204.**

The ability of power conversion device **206** to automatically override command(s) from controller **204** to control the current and, thereby, the voltage within power conversion device **206** and/or power system **200** allows for a rapid response to a rapid change in voltage which may otherwise cause damage to power system **200** and/or components thereof or otherwise compromise operation of power system **200.**

For example, the ability of power conversion device **206** to control voltage indirectly via current rather than control voltage directly allows power conversion device **206** to immediately respond to a rapid change in voltage rather than delay such response by switching configurations from a current-controlling configuration to a voltage-controlling configuration. Similarly, the ability of power conversion device **206** to immediately respond to a rapid change in voltage avoids delays which may result from awaiting a change in command(s) from controller **204.**

Disclosed herein are a system and method of controlling voltage in a power system by automatically manipulating current with a power conversion device in response to a measured voltage value within the power system meeting or exceeding at least one predetermined threshold. The power conversion device may also automatically disconnect from the power system when the measured voltage value meets or exceeds an over-voltage protection threshold. Current manipulation and disconnect from the power system may occur without receiving a command from a supervisory controller.

While the system and methods herein have been described by reference to various specific embodiments it should be understood that numerous changes may be made within the spirit and scope of the concepts described, accordingly, it is intended that the invention is not limited to the described embodiments but will have full scope defined by the language of the following claims.

## Claims

1. A system for limiting voltage, the system comprising:
a power source (202) configured to provide power to a power network (208) of the system;
a power conversion device (206) connecting the power source to the power network; and
a controller (204) connected to the power conversion device and configured to transmit a current command to the power conversion device to maintain a steady current within the power conversion device;
wherein the power conversion device (206) is configured to override the current command received by the controller and automatically alter current within the power conversion device in response to a measured voltage of the power system meeting or exceeding a predetermined voltage threshold.

2. The system of claim 1, wherein the power source includes a battery system (210).

3. The system of claim 1 or 2, wherein the power conversion device (206) is configured to revert to the transmitted current command of the controller (204) when the measured voltage of the power system is within a normal operation zone which does not meet or exceed the predetermined voltage threshold.

4. The system of any of the preceding claims, wherein the predetermined voltage threshold includes a first predetermined voltage threshold defined in part by a preselected maximum voltage value and a second predetermined voltage threshold defined in part by a preselected minimum voltage value.

5. The system of claim 4, wherein the power conversion device (206) is configured to automatically decrease current in response to the measured voltage meeting or exceeding the first predetermined voltage threshold; and
the power conversion device is configured to automatically increase current in response to the measured voltage meeting or exceeding the second predetermined voltage threshold.

6. The system of any of the preceding claims, wherein the power conversion device (206) is configured to automatically disconnect from the power system in response to the measured voltage of the power system meeting or exceeding an over-voltage protection threshold greater than the predetermined voltage threshold.

7. A power system, the power system comprising:
a power source (202);
a power network (208); and
a power conversion device (206) configured to connect the power source and the power network, the power conversion device having:
a first state in which the power conversion device maintains a steady current;
a second state in which a measured voltage meets or exceeds a first voltage threshold and the power conversion device increases current in response; and
a third state in which the measured voltage meets or exceeds a second voltage threshold and the power conversion device decreases current in response.

8. The power system of claim 7, wherein the power conversion device (206) is configured to automatically change from any of the first state, the second state, and the third state to any other of the first state, the second state, and the third state in response to a change in the measured voltage.

9. The power system of claim 7 or 8, the power conversion device (206) further having a fourth state in which the measured voltage meets or exceeds a third voltage threshold and the power conversion device disconnects from the power system.

10. The power system of any of claims 7 to 9, wherein the first voltage threshold is determined by a preselected maximum voltage value and a preselected high voltage value.

11. The power system of any of claims 7 to 10, wherein the second voltage threshold is determined by a preselected minimum voltage value and a preselected low voltage value.

12. The power system of any of claims 7 to 11, wherein the first voltage threshold and the second voltage threshold are separated by a zone of normal operation in which the power conversion device is in the first state.

13. A method for limiting voltage, the method comprising:
measuring a change in voltage within a power system including a power conversion device (206);
automatically increasing current using the power conversion device in response to a measured voltage meeting or exceeding a first threshold;
automatically decreasing current using the power conversion device in response to the measured voltage meeting or exceeding a second threshold; and
automatically disconnecting the power conversion device in response to the measured voltage meeting or exceeding a third threshold.

14. The method of claim 13, further comprising returning to a steady state in which the power conversion device (206) maintains a steady current in response to the measured voltage no longer meeting or exceeding the first threshold.

15. The method of claim 13 or 14, wherein:
the method further comprises returning to a steady state in which the power conversion device maintains a steady current in response to the measured voltage no longer meeting or exceeding the second threshold; and/or
measuring a change in voltage within a power system occurs in response to a sudden change in current downstream of the power system from the power conversion device; and/or
the method further comprises maintaining a steady current with the power conversion device in response to a command received by a controller in response to the measured voltage meeting or exceeding none of the first threshold, the second threshold, and the third threshold; and/or
the first threshold and the second threshold are separated by a zone of normal operation in which the power conversion device maintains a steady current; and/or
the first threshold is defined by a line of interpolation between a preselected minimum voltage value at a 0% charge current and a preselected low voltage value at a 100% charge current when the power system is in a charging state; and/or
the second threshold is defined by a line of interpolation between a preselected maximum voltage at a 0% discharge current and a preselected high voltage value at a 100% discharge current when the power system is in a discharging state.
